# EUROPEAN PATENT APPLICATION

(11) **EP 4 302 657 A1**
(43) Date of publication of application: **10.01.2024**
(21) Application number: 23170679.7
(22) Date of filing: 28.04.2023
(51) Int. Cl.: A47J 31/18, A47J 31/40

(54) **A COFFEE MAKER**

(30) Priority: 29.06.2022 TR 202210729
(71) Applicant: Arçelik Anonim Sirketi, 34445 Istanbul (TR)
(72) Inventor: BERKAN, CEVDET MUMTAZ, 34445 ISTANBUL (TR); EDIS, KUTAY, 34445 ISTANBUL (TR); KAYISDAG, VAROL, 34445 ISTANBUL (TR); GOZEL, SUHEYLA, 34445 ISTANBUL (TR); ARIS, MUHARREM, 34445 ISTANBUL (TR)

(57) **Abstract**

The present invention relates to a coffee maker (1) comprising at least one brewing pot (2) wherein water, coffee and similar materials are put and which is placed into the brewing chamber; at least one heater which is disposed on the base of the brewing chamber and which heats the brewing pot (2); a control unit which enables the heater to be turned on and off; at least one sugar receptacle (3) which receives sugar; at least one coffee receptacle (4) which receives coffee; at least one first orifice (5) which opens into the coffee and/or sugar receptacle (3 and/or 4) and which enables the transfer of coffee and sugar; a second orifice (6) through which water is taken; a third orifice (7) which enables coffee, sugar and water to be mixed and transferred together into the brewing pot; (2) and at least one transfer channel (8) which extends from the sugar and coffee receptacles (3 and 4) towards the brewing pot (2) from top to bottom in an inclined manner and wherein coffee, sugar and water are mixed and transferred into the brewing pot (2).

## Description

The present invention relates to a coffee maker which is used for preparing especially Turkish coffee, wherein the mixture of coffee, sugar and water is efficiently transferred into the brewing pot.

In the traditional brewing method of Turkish coffee, the mixture of coffee and water is brewed in the coffee pot until boiling temperature and the brewing process is ended when the rising foam reaches an ideal height. Sugar is also added as per user preference.

In coffee makers, especially in Turkish coffee makers, sugar and coffee are stored in receptacles accessible to the user. The brewing process is performed in a compartment such as coffee pot, container, brewing pot, etc. In these embodiments, coffee and sugar must be automatically transferred to the brewing pot. Various problems may occur during this transfer. One of these problems is the positioning of the coffee and sugar dosing receptacle on the brewing pot due to the desire to benefit from gravity. In this case, the steam generated during the brewing process reaches the coffee and sugar in the dosing receptacles and causes the same to come into contact with moisture. This causes the coffee to go stale and the sugar to solidify. Solidification of sugar makes it difficult to transfer sugar and causes hygiene problems. Moreover, the dosing of the desired amount of sugar is prevented.

Another problem is that coffee and sugar residues remain in the existing transfer channel during the transfer of coffee and sugar to the brewing pot. Although the transfer channel is designed as vertically as possible in order to eliminate this problem, residues on the surfaces cannot be prevented. Moreover, making the transfer channel vertical also causes the height of the coffee maker to increase. The more horizontal the transfer channel is, the lower the height of the coffee maker becomes.

However, in the state of the art Turkish coffee makers, sugar and coffee are transferred to a single brewing pot. This causes loss in labor and time when the user has to prepare more than one cup of coffee. The external addition of coffee and sugar to the coffee maker by the user creates inconsistency in the ingredients, prevents the brewing of coffee in the desired quality and causes loss in time for the user.

Fully automatic options are very limited in today's Turkish coffee makers. Although there are many options in filter coffee and espresso makers, since the brewing methods thereof are different from Turkish coffee, mixing the coffee with cold water and then brewing the same is not possible these types of coffee makers.

There are two different approaches to dosing coffee and sugar in the state of the art Turkish coffee makers. One of these approaches is to store the coffee above the brewing pot and pour the coffee into the brewing pot with an electromechanical system before the brewing process starts. In this method, the user is given the opportunity to load as much coffee as he/she can brew at one cycle. The user cannot store coffee for future use.

The other method is disclosed in the state of the art United States Patent Application No. US2017258262. This document discloses a sugar dosing mechanism for a coffee maker. According to this document, the user puts the ingredients in an amount sufficient for a single use into the coffee and sugar receptacles. The coffee and sugar in said receptacles are transferred to the brewing pot before the brewing process by means of gravity. In this method, residue remains in the coffee and sugar receptacles, which causes customer dissatisfaction.

In the state of the art Turkish Patent Application No. TR201301618, a sugar dosing mechanism is disclosed, comprising a sugar receptacle and a motor.

In the state of the art European Patent Application No. EP 1254621, a sugar dosing mechanism is disclosed, comprising a spiral sugar receptacle and a motor.

In the state of the United Sates Patent No. US5330078, a coffee maker is disclosed, comprising a spiral mechanism for dosing sugar and similar materials.

The aim of the present invention is the realization of a coffee maker wherein the mixture of coffee, sugar and water is efficiently transferred into the brewing pot.

The coffee maker realized in order to attain the aim of the present invention, explicated in the first claim and the respective claims thereof, comprises at least one brewing pot wherein water, coffee and similar materials are put and which is placed into the brewing chamber; at least one heater which is disposed on the base of the brewing chamber and which heats the brewing pot; a control unit which enables the heater to be turned on and off; at least one sugar receptacle which receives sugar; at least one coffee receptacle which receives coffee; at least one first orifice which opens into the coffee and/or sugar receptacle and which enables the transfer of coffee and sugar; a second orifice through which water is taken; a third orifice which enables coffee, sugar and water to be mixed and transferred together into the brewing pot; and a transfer channel which extends from the coffee and sugar receptacles towards the brewing pot from top to bottom in an inclined manner and wherein coffee, sugar and water are mixed and transferred into the brewing pot. By means of the inclined placement of the transfer channel, the mixture of coffee, sugar and water moves in the transfer channel by means of gravity to be transferred to the brewing pot without leaving any residue in the transfer channel. Moreover, by means of the angled transfer channel, the volume of the brewing pot is increased without increasing the height of the coffee maker.

The coffee and sugar receptacles are not positioned at the same vertical level with the brewing pot. Before the brewing process, coffee and sugar dosed into the brewing pot are not transferred directly, but instead are first transferred to the transfer channel. Coffee and sugar enter the transfer channel by means of gravity through the first orifice. After being transferred through the first orifice into the transfer channel, coffee and sugar are mixed with preferably pressurized water delivered through the second orifice such that the mixture of coffee, sugar and water is transferred to the brewing pot through the third orifice, which forms the outlet of the transfer channel and which opens into the brewing pot.

The coffee maker comprises a base whereon coffee and sugar accumulate, which forms the bottom of the volume into which the first and second orifices open, and which forms the first surface the coffee and sugar from the coffee and sugar receptacles reach. This part also forms the inlet section of the transfer channel.

In an embodiment of the present invention, the second orifice is arranged on the wall behind the base. Thus, it is ensured that all of the coffee and sugar get into contact with water while preventing the formation of residues in the transfer channel.

In an embodiment of the present invention, the second orifice is positioned parallel to the plane of the base, in other words perpendicular to the coffee and sugar heap. In another version of this embodiment, the second orifice is positioned at an angle with respect the plane of the base.

In an embodiment of the present invention, the coffee maker comprises a pump which is connected to a water source. Thus, the water pressurized by the pump leaves the second orifice with pressure and hits the coffee and sugar mixture accumulated on the base with pressure. With the effect of this impact, it is ensured that the mixture of coffee and sugar is mixed with water so as to reach the brewing pot by passing through the third orifice after moving forward without leaving any residue in the transfer channel.

In the coffee maker with a plurality of brewing pots, the coffee maker comprises at least two transfer channels with a common first orifice, second orifice and base, each having at least two third orifices opening to different brewing pots. In this embodiment of the present invention, the coffee maker comprises at least one shutter which is disposed in at least one transfer channel to enable the mixture of coffee, sugar and water leaving the base to be guided to the desired brewing pot and which enables the transfer of the mixture of coffee, sugar and water into one or more brewing pots by opening and closing. Thus, it is provided that more than one cup of Turkish coffee can be prepared with or without sugar or in different portions and densities at the same time. Moreover, by means of the shutter, the number of brewing pots is increased by increasing the number of transfer channels and he third orifices without making any changes in the first orifice, second orifice and base.

The number of transfer channels is increased in order to transfer to more than one brewing pot. By means of said transfer channels, the mixture of coffee, sugar and water is guided to different brewing pots. While the inlet section where the first orifice, the second orifice and the base are located is the same, the outlet section where the third orifice is located is designed to match the number of transfer channels. The transfer channel is located between the inlet section and the outlet section, and it is determined to which brewing pot the transfer is to be made by means of the shutter.

In the embodiment of the present invention, the shutter closes the transfer channel. Thus, the mixture of water, coffee and sugar is guided to the other transfer channel. In this embodiment of the present invention, the coffee maker comprises a gasket which provides leakproofing between the transfer channels. Thus, the transfer channels other than the transfer channel to which the coffee, sugar and water mixture is to be transferred are closed with the shutter and become leakproof by means of the gasket.

In another embodiment of the present invention, the coffee maker comprises a motor which enables the shutter to move.

By means of the present invention, the coffee and sugar receptacles are positioned away from the steam generated during the brewing process and coffee is prevented from going stale and sugar is prevented from solidifying due to humidity. Mixing and moving coffee and sugar with water in an angled channel eliminates the possibility of coffee and sugar residues in the transfer channel. Moreover, the mixing performance, which affects the flavor of coffee, is improved before the brewing process by means of the transfer of coffee and sugar to the brewing pot by passing through the transfer channel with water.

A coffee maker realized in order to attain the aim of the present invention is illustrated in the attached figures, where:
Figure 1 - is the perspective view of a coffee maker.
Figure 2 - is the perspective view of the brewing pot and the transfer channel.
Figure 3 - is the sideways view of the brewing pot and the transfer channel.
Figure 4 - is the top view of the coffee maker.

The elements illustrated in the figures are numbered as follows:
1. Coffee maker
2. Brewing pot
3. Sugar receptacle
4. Coffee receptacle
5. First orifice
6. Second orifice
7. Third orifice
8. Transfer channel
9. Base
10. Shutter

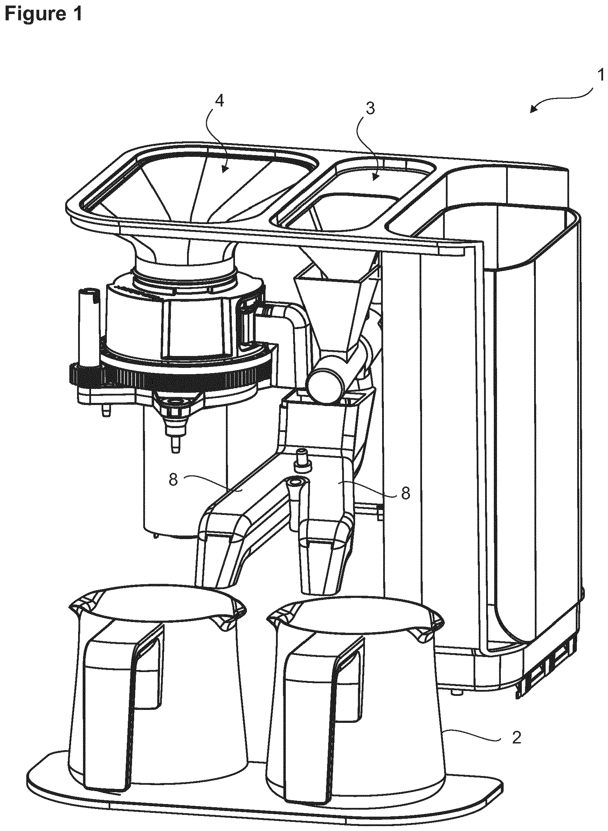

The coffee maker (1) comprises at least one brewing pot (2) wherein water, coffee and similar materials are put and which is placed into the brewing chamber; at least one heater which is disposed on the base of the brewing chamber and which heats the brewing pot (2); a control unit which enables the heater to be turned on and off; at least one sugar receptacle (3) which receives sugar; at least one coffee receptacle (4) which receives coffee; at least one first orifice (5) which opens into the coffee and/or sugar receptacle (3 and/or 4) and which enables the transfer of coffee and sugar; a second orifice (6) through which water is taken; a third orifice (7) which enables coffee, sugar and water to be mixed and transferred together into the brewing pot; (2) and at least one transfer channel (8) which extends from the sugar and coffee receptacles (3 and 4) towards the brewing pot (2) from top to bottom in an inclined manner and wherein coffee, sugar and water are mixed and transferred into the brewing pot (2). By means of the inclined placement of the transfer channel (8), the mixture of coffee, sugar and water moves in the transfer channel (8) by means of gravity to be transferred to the brewing pot (2) without leaving any residue in the transfer channel (8). Moreover, by means of the angled transfer channel (8), the volume of the brewing pot (2) is increased without increasing the height of the coffee maker (1) (Figure 1).

The sugar and coffee receptacles (3 and 4) are not positioned at the same vertical level with the brewing pot (2). Before the brewing process, coffee and sugar dosed into the brewing pot (29 are not transferred directly, but instead are first transferred to the transfer channel (8). Coffee and sugar enter the transfer channel (8) by means of gravity through the first orifice (5). After being transferred through the first orifice (5) into the transfer channel (8), coffee and sugar are mixed with preferably pressurized water delivered through the second orifice (6) such that the mixture of coffee, sugar and water is transferred to the brewing pot (2) through the third orifice (7), which forms the outlet of the transfer channel (8) and which opens into the brewing pot (2).

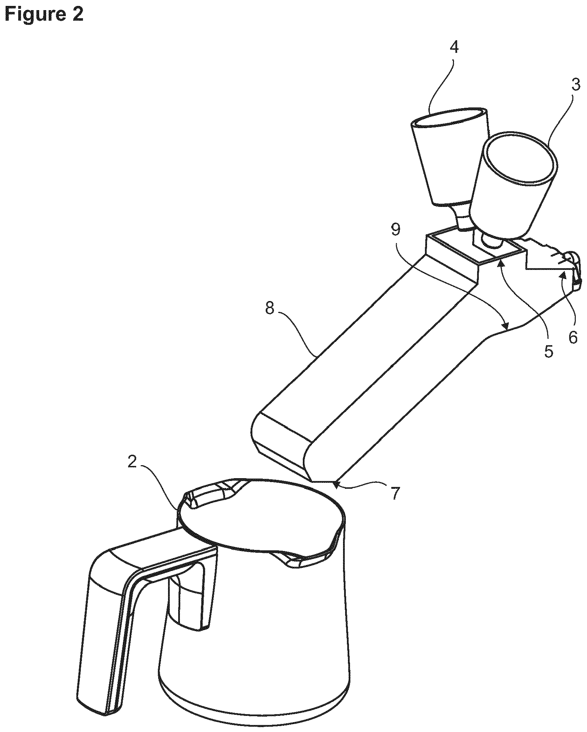

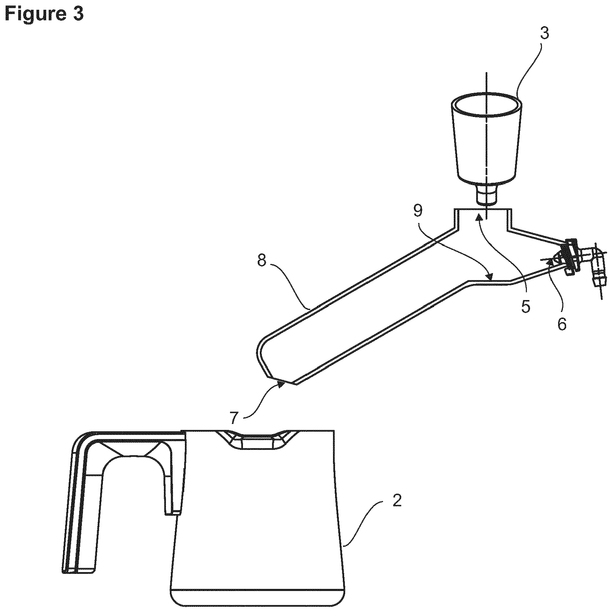

The coffee maker (1) comprises a base (9) whereon coffee and sugar accumulate, which forms the bottom of the volume into which the first and second orifices (5 and 6) open, and which forms the first surface the coffee and sugar from the sugar and coffee receptacles (3, 4) reach. This part also forms the inlet section of the transfer channel (8) (Figure 2 and Figure 3).

In an embodiment of the present invention, the second orifice (6) is arranged on the wall behind the base (9). Thus, it is ensured that all of the coffee and sugar get into contact with water while preventing the formation of residues in the transfer channel (8).

In an embodiment of the present invention, the second orifice (6) is positioned parallel to the plane of the base (9), in other words perpendicular to the coffee and sugar heap. In another version of this embodiment, the second orifice (6) is positioned at an angle with respect the plane of the base (9).

In an embodiment of the present invention, the coffee maker (1) comprises a pump which is connected to a water source. Thus, the water pressurized by the pump leaves the second orifice (6) with pressure and hits the coffee and sugar mixture accumulated on the base (9) with pressure. With the effect of this impact, it is ensured that the mixture of coffee and sugar is mixed with water so as to reach the brewing pot (2) by passing through the third orifice (7) after moving forward without leaving any residue in the transfer channel (8).

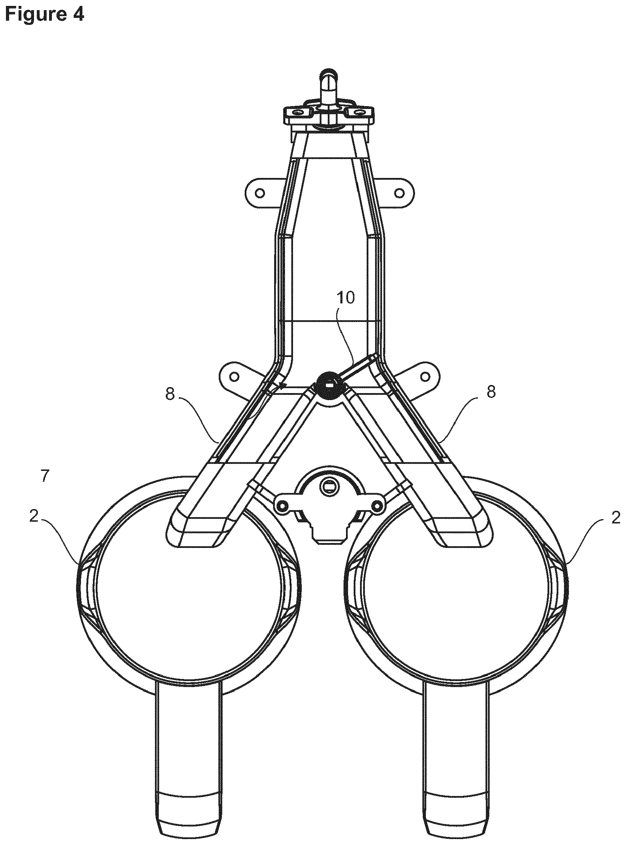

In the coffee maker (1) with a plurality of brewing pots (2), the coffee maker (1) comprises at least two transfer channels (8) with a common first orifice (5), second orifice (6) and base (9), each having at least two third orifices (7) opening to different brewing pots (2). In this embodiment of the present invention, the coffee maker (1) comprises at least one shutter (10) which is disposed in at least one transfer channel (8) to enable the mixture of coffee, sugar and water leaving the base (9) to be guided to the desired brewing pot (2) and which enables the transfer of the mixture of coffee, sugar and water into one or more brewing pots (2) by opening and closing. Thus, it is provided that more than one cup of Turkish coffee can be prepared with or without sugar or in different portions and densities at the same time. Moreover, by means of the shutter (10), the number of brewing pots (2) is increased by increasing the number of the transfer channels (8) and third orifices (7) without making any changes in the first orifice (5), second orifice (6) and base (9) (Figure 4).

The number of transfer channels (8) is increased in order to transfer to more than one brewing pot (2). By means of said transfer channels (8), the mixture of coffee, sugar and water is guided to different brewing pots (2). While the inlet section where the first orifice (5), the second orifice (6) and the base (9) are located is the same, the outlet section where the third orifice (7) is located is designed to match the number of transfer channels (8). The transfer channel (8) is located between the inlet section and the outlet section, and it is determined to which brewing pot (2) the transfer is to be made by means of the shutter (10).

In the embodiment of the present invention, the shutter (10) closes the transfer channel (8). Thus, the mixture of water, coffee and sugar is guided to the other transfer channel (8). In this embodiment of the present invention, the coffee maker (1) comprises a gasket which provides leakproofing between the transfer channels (8). Thus, the transfer channels (8) other than the transfer channel (8) to which the coffee, sugar and water mixture is to be transferred are closed with the shutter (10) and become leakproof by means of the gasket.

In another embodiment of the present invention, the coffee maker (1) comprises a motor which enables the shutter (10) to move.

By means of the present invention, the sugar and coffee receptacles (3 and 4) are positioned away from the steam generated during the brewing process and coffee is prevented from going stale and sugar is prevented from solidifying due to humidity. Mixing and moving coffee and sugar with water in an angled channel eliminates the possibility of coffee and sugar residues in the transfer channel (8). Moreover, the mixing performance, which affects the flavor of coffee, is improved before the brewing process by means of the transfer of coffee and sugar to the brewing pot (2) by passing through the transfer channel (8) with water.

## Claims

1. A coffee maker (1) **comprising** at least one brewing pot (2) wherein water, coffee and similar materials are put and which is placed into the brewing chamber; at least one heater which is disposed on the base of the brewing chamber and which heats the brewing pot (2); a control unit which enables the heater to be turned on and off; at least one sugar receptacle (3) which receives sugar; and at least one coffee receptacle (4) which receives coffee, **characterized by** at least one first orifice (5) which opens into the coffee and/or sugar receptacle (3 and/or 4) and which enables the transfer of coffee and sugar; a second orifice (6) through which water is taken; a third orifice (7) which enables coffee, sugar and water to be mixed and transferred together into the brewing pot; (2) and at least one transfer channel (8) which extends from the sugar and coffee receptacles (3 and 4) towards the brewing pot (2) from top to bottom in an inclined manner and wherein coffee, sugar and water are mixed and transferred into the brewing pot (2).

2. A coffee maker (1) as in Claim 1, **characterized by** a base (9) whereon coffee and sugar accumulate, which forms the bottom of the volume into which the first and second orifices (5 and 6) open, and which forms the first surface the coffee and sugar from the sugar and coffee receptacles (3, 4) reach.

3. A coffee maker (1) as in Claim 1, **characterized by** the second orifice (6) which is arranged on the wall behind the base (9).

4. A coffee maker (1) as in Claim 1, **characterized by** the second orifice (6) which is positioned parallel to the plane of the base (9).

5. A coffee maker (1) as in Claim 1, **characterized by** a pump which is connected to a water source.

6. A coffee maker (1) as in any one of the above claims, **characterized by** at least two transfer channels (8) with a common first orifice (5), second orifice (6) and base (9), each having at least two third orifices (7) opening to different brewing pots (2).

7. A coffee maker (1) as in Claim 6, **characterized by** at least one shutter (10) which is disposed in at least one transfer channel (8) to enable the mixture of coffee, sugar and water leaving the base (9) to be guided to the desired brewing pot (2) and which enables the transfer of the mixture of coffee, sugar and water into one or more brewing pots (2) by opening and closing.

8. A coffee maker (1) as in Claim 6, **characterized by** the transfer channel (8) which is provided between the inlet section and the outlet section, wherein while the inlet section where the first orifice (5), the second orifice (6) and the base (9) are located is the same, the outlet section where the third orifice (7) is located is designed to match the number of transfer channels (8).
